# EUROPÄISCHE PATENTSCHRIFT

(11) **EP 3 971 029 B1**
(45) Veröffentlichungstag und Bekanntmachung des Hinweises auf die Patenterteilung: **08.03.2023**
(21) Anmeldenummer: 21189569.3
(22) Anmeldetag: 04.08.2021
(51) Int. Cl.: B60P 1/02, B60P 1/43, B62D 53/00, B66F 9/06, B66F 9/08, B66F 9/10, B66F 9/12, B66F 9/14, B66F 9/16, B66F 9/18

(54) **ROUTENZUGANHÄNGER**
ROUTE TRAIN TRAILER
REMORQUE DE CHARIOT TRACTEUR

(30) Priorität: 22.09.2020 DE 102020124673
(43) Veröffentlichungstag der Anmeldung: 23.03.2022
(73) Patentinhaber: LR Intralogistik GmbH, 84109 Wörth a. d. Isar (DE)
(72) Erfinder: KOLLMANNSBERGER, Josef, 84106 Volkenschwand (DE)
(74) Vertreter: Patentship Patentanwaltgesellschaft

(56) Entgegenhaltungen:
- EP-A1- 2 226 240
- EP-A1- 3 040 235
- DE-A1-102013 009 386
- DE-A1-102017 101 368
- DE-U1-202011 050 891
- GB-A- 1 203 574
- US-A- 5 112 183

## Beschreibung

Die Erfindung betrifft einen Routenzuganhänger für einen Routenzug, wobei der Routenzuganhänger einen Tragrahmen mit mindestens einem Rad und einen an dem Tragrahmen mittels einer Hubvorrichtung zwischen einer abgesenkten Stellung und einer angehobenen Stellung anhebbar und absenkbar angeordneten Lastenträger aufweist, wobei der Lastenträger einen Zinkenträger aufweist, an dem mindestens ein Lastaufnahmemittel, insbesondere eine Gabelzinke, zur Aufnahme eines Ladungsträgers angeordnet ist.

Für den innerbetrieblichen Transport von Ladungsträgern, beispielsweise im Produktionsbereich von Produktionsbetrieben, kommen zunehmend Routenzüge zum Einsatz, die aus einem Zugfahrzeug, beispielsweise einem Schlepper, und einem oder mehreren Routenzuganhängern bestehen, auf denen die Lastenträger transportiert werden. Dabei sind Routenzuganhänger bekannt, die als Lastaufnahmemittel mindestens eine Gabelzinke aufweisen, die an einem anhebbar und absenkbar angeordneten Zinkenträger angeordnet sind. Als Ladungsträger werden hierbei auf Rollen fahrbare Trolleys oder auf Rollen fahrbare Gitterboxen verwendet, die in der abgesenkten Stellung des Zinkenträgers auf die Gabelzinken aufgeschoben und somit in den Routenzuganhänger aufgenommen werden können. Zum Transport der in den Routenzuganhänger aufgenommenen Ladungsträger wird der Zinkenträger mit den Gabelzinken in die angehobene Stellung angehoben, so dass die Ladungsträger mit den Rollen von der Fahrbahn abgehoben werden.

Gattungsgemäße Routenzuganhänger sind aus den Figuren 1 bis 3 der DE 10 2014 100 865 A1 und der EP 2 487 067 B1 und der DE 10 2017 101368 A1 bekannt. Die Hubvorrichtung des Zinkenträgers ist bei diesen Routenzuganhängern von vertikal angeordneten Linearführungen gebildet, die einen linearen Hub ermöglichen, beispielsweise an dem Tragrahmen angeordneten Hubmastprofilen, in denen der Zinkenträger mittels Rollen oder Gleitelementen linear anhebbar und absenkbar geführt ist. Nachteilig an gattungsgemäße Routenzuganhänger mit derartigen als Linearführungen ausgebildeten Hubvorrichtungen ist, dass derartige Linearführungen eine aufwändige Bauweise mit einem hohen Bauaufwand aufweisen. Weiterhin ist bei gattungsgemäßen Routenzuganhänger mit derartigen als Linearführungen ausgebildeten Hubvorrichtungen nachteilig, dass eine angehobene Gabelzinke unter einer Belastung durch einen aufgenommenen und angehobenen Ladungsträger eine Durchbiegung nach vertikal unten aufweist, die dazu führt, dass der Ladungsträger im vorderen Bereich, d.h. im Bereich der Gabelzinkenspitze der Gabelzinken, nach unten hängt. Durch die lastbedingte Durchbiegung der angehobenen Gabelzinken und deren Neigung nach unten besteht die Gefahr, dass der auf den Gabelzinken aufgenommene Ladungsträger während des Transports im Routenzuganhänger von den Gabelzinken rutscht und verloren wird. Die lastbedingte Durchbiegung der angehobenen Gabelzinken und deren Neigung nach unten führt weiterhin dazu, dass die Höhe des Hubs der Hubvorrichtung um die Durchbiegung der Gabelzinken verringert wird, was zu einer Verringerung der Bodenfreiheit des mit angehobenen Gabelzinken fahrenden Routenzuganhängers führt.

Der vorliegenden Erfindung liegt die Aufgabe zugrunde, einen Routenzuganhänger der eingangs genannten Gattung zur Verfügung zu stellen, der eine einfach aufgebaute Hubvorrichtung des Zinkenträgers aufweist und der es auf einfache Weise ermöglicht, die lastbedingte Durchbiegung der Lastaufnahmemittel zu kompensieren.

Diese Aufgabe wird erfindungsgemäß dadurch gelöst, dass die Hubvorrichtung mindestens einen unteren Lenkerarm und mindestens einen oberen Lenkerarm aufweist, wobei der Zinkenträger mittels den Lenkerarmen mit dem Tragrahmen verbunden ist und wobei der obere Lenkerarm von dem unteren Lenkerarm in vertikaler Richtung beabstandet angeordnet ist, wobei die Kinematik der Lenkerarme derart ausgeführt ist, dass beim Anheben des Zinkenträgers von der abgesenkten Stellung in die angehobene Stellung ein Rückneigen des Lastaufnahmemittels erzielt wird.

Die erfindungsgemäße Hubvorrichtung des Zinkenträgers weist mindestens einen unteren Lenkerarm und mindestens einen oberen Lenkerarm auf, die in vertikaler Richtung beabstandet voneinander angeordnet sind und mit denen der Zinkenträger an dem Tragrahmen angebunden ist. Eine derartige aus mehreren Lenkerarmen bestehende Hubvorrichtung weist gegenüber einer aus Linearführungen bestehenden Hubvorrichtung einen einfacheren Aufbau mit verringertem Bauaufwand auf.

Eine aus mehreren Lenkerarmen bestehende Hubvorrichtung des Zinkenträgers kann weiterhin in einfacher Weise erfindungsgemäß mit einer derartigen Kinematik der Lenkerarme versehen werde, dass beim Anheben des Zinkenträgers von der abgesenkten Stellung in die angehobene Stellung eine Schrägstellung des Lastaufnahmemittels mit einem Rückneigen des Lastaufnahmemittels erzielt wird. Mit dem Rückneigen des Lastaufnahmemittels in der angehobenen Stellung des Zinkenträgers kann die lastbedingte Durchbiegung der Lastaufnahmemittel kompensiert werden und der gesamte Hub der Hubvorrichtung als Bodenfreiheit des Routenzuganhängers erzielt werden.

Erfindungsgemäß ist die Kinematik der Lenkerarme derart ausgeführt, dass das Lastaufnahmemittel in der abgesenkten Stellung des Zinkenträgers parallel zu einer Fahrbahn angeordnet ist, auf der sich der Routenzuganhänger befindet, und sich beim Anheben des Zinkenträgers ein Rückneigen des Lastaufnahmemittels ergibt, so dass in der angehobenen Stellung des Zinkenträgers das Lastaufnahmemittel im Bereich seiner Spitzen weiter angehoben sind als im Bereich des Zinkenträger. Durch dieses Rückneigen des Lastaufnahmemittels wird erzielt, dass ein auf den angehobenen Lastaufnahmemitteln befindlicher Ladungsträger sicher aufgenommen und gehalten wird, so dass die Gefahr verringert wird bzw. vermieden wird, dass ein auf den angehobenen Lastaufnahmemitteln aufgenommener Ladungsträger während der Fahrt des Routenzuganhängers von dem Lastaufnahmemittel rutschen kann.

Gemäß einer vorteilhaften Ausführungsform der Erfindung ist der untere Lenkerarm mittels einer ersten Gelenkachse mit dem Tragrahmen und mittels einer zweiten Gelenkachse mit dem Zinkenträger verbunden und ist der obere Lenkerarm mittels einer dritten Gelenkachse mit dem Tragrahmen und mittels einer vierten Gelenkachse mit dem Zinkenträger verbunden, wobei die Gelenkachsen derart angeordnet sind, dass der untere Lenkerarm und der obere Lenkerarm zumindest in der abgesenkten Stellung nicht parallel zueinander angeordnet sind. Der Zinkenträger, der über die beiden Lenkerarme mit dem Tragrahmen gelenkig verbunden ist, bewegt sich beim Anheben und Absenken auf einer Kreisbahn. Sofern der untere Lenkerarm und der obere Lenkerarm zumindest in der abgesenkten Stellung nicht parallel zueinander angeordnet sind, kann auf einfache Weise erzielt werden, dass das Lastaufnahmemittel im vorderen Bereich seiner Spitze weiter angehoben wird als im hinteren Bereich, mit dem das Lastaufnahmemittel an dem Zinkenträger befestigt ist. Dadurch kann auf einfache Weise durch geeignete geometrische Anordnung der Gelenkachsen, die zu einer nicht parallelen Anordnung der beiden Lenkerarme führen, in der angehobenen Stellung des Zinkenträgers ein Rückneigen des Lastaufnahmemittels erzielt wird.

Gemäß einer vorteilhaften Ausgestaltungsform der Erfindung ist in der abgesenkten Stellung der vertikale Abstand zwischen der zweiten Gelenkachse und der vierten Gelenkachse größer als der vertikale Abstand zwischen der ersten Gelenkachse und der dritten Gelenkachse. Mit einer derartigen geometrische Anordnung der Gelenkachsen und somit Kinematik der Lenkerarme kann auf einfache Weise in der angehobenen Stellung des Zinkenträgers ein Rückneigen des Lastaufnahmemittels erzielt wird.

Gemäß einer vorteilhaften Ausgestaltungsform der Erfindung ist in der abgesenkten Stellung der untere Lenkerarm gegenüber einer Horizontalebene um den Winkel α geneigt angeordnet und ist der obere Lenkerarm gegenüber einer Horizontalebene um den Winkel β geneigt angeordnet, wobei der Winkel α größer als der Winkel β ausgeführt ist. Mit einer derartigen geneigten und somit nicht parallelen Anordnung der beiden Lenkerarme und somit Kinematik der Lenkerarme kann auf einfache Weise in der angehobenen Stellung des Zinkenträgers ein Rückneigen des Lastaufnahmemittels erzielt wird.

Gemäß einer vorteilhaften Ausführungsform der Erfindung sind der untere Lenkerarm und der obere Lenkerarm mit identischen Längen zwischen den Gelenkachsen ausgeführt. Da bei dem erfindungsgemäßen Routenzuganhänger das Rückneigen des Lastaufnahmemittels in der angehobenen Stellung des Zinkenträgers über die nicht parallele Anordnung des unteren und oberen Lenkerarms erzielt wird, können die Lenkerarme als Gleichteile mit gleichen Längen ausgeführt werden, wodurch sich der Bauaufwand der Hubvorrichtung weiter verringern lässt.

Der Tragrahmen weist gemäß einer vorteilhaften Ausführungsform der Erfindung einen Längsträger und zumindest einen Querträger auf, wobei die erste Gelenkachse und die dritte Gelenkachse an dem Längsträger angeordnet ist.

Bevorzugt ist die erste Gelenkachse an der Unterseite des Längsträges angeordnet und ist die dritte Gelenkachse an der Oberseite des Längsträgers angeordnet. Dadurch wird - in Fahrzeugquerrichtung des Routenzuganhängers gesehen - eine bauraumsparende Anordnung der beiden Lenkerarme erzielt.

Die Hubvorrichtung weist weiterhin gemäß einer zweckmäßigen Weiterbildung der Erfindung mindestens einen Hubantrieb auf. Mit einem Hubantrieb kann der Zinkenträger in einfacher Weise angehoben und abgesenkt werden.

Hinsichtlich eines einfachen Aufbaus ergeben sich Vorteile, wenn der Hubantrieb gemäß einer vorteilhaften Ausgestaltungsform der Erfindung als Linearantrieb ausgebildet ist, der zwischen dem Tragrahmen und dem Zinkenträger angeordnet ist.

Bevorzugt ist der Linearantrieb als elektrischer Linearantrieb ausgebildet. Es versteht sich, dass alternativ der Linearantrieb als pneumatischer Linearantrieb oder als Hydraulikzylinder ausgebildet sein kann.

Der erfindungsgemäße Routenzuganhänger weist eine Reihe von Vorteilen auf.

Die Ankopplung des Zinkenträgers an den Tragrahmen mittels der Lenkerarme führt zu einer Bewegung des Zinkenträgers auf einer Kreisbahn. Diese Bewegung auf einer Kreisbahn kann mit einfachen und kostengünstigen Radiallagern, beispielsweise Drehlagerungen oder Gelenkköpfen, an den Gelenkachsen der Lenkerarme abgebildet werden. Dadurch entfallen aufwändige Linearführung. Die mit Radiallagern an den Tragrahmen und an den Zinkenträger angekoppelten Lenkerarme weisen eine geringe Komplexität der Hubvorrichtung auf und führen zu einer Erhöhung der Ausfallsicherheit der Hubvorrichtung.

Durch die einfache Drehlagerung der Lenkerarme kann der Zinkenträger mehrfach am Längsträger des Tragrahmens angebunden werden, wodurch in einfacher Weise die Durchbiegung des Zinkenträgers reduziert werden kann.

Weiterhin können in sehr einfacher Weise die Abmessungen des Tragrahmens verändert werden, da bei einer Verlängerung des Längsträgers in einfacher Weise Lenkerarme hinzugefügt bzw. bei einer Verkürzung des Längsträgers in einfacher Weise Lenkerarme weggelassen werden können. Weiterhin kann die Zuladung auf den Lastaufnahmemitteln in einfacher Weise durch Hinzufügen oder Weglassen von Lenkerarmen variiert werden.

Das durch die Kinematik der Lenkerarme erzielte Rückneigen der Lastaufnahmemittel in der angehobene Stellung des Zinkenträgers ermöglicht es in einfacher Weise, die Durchbiegung der einen Ladungsträger aufnehmenden Lastaufnahmemittel zu kompensieren und ausgeglichen. Dadurch wird eine größere Bodenfreiheit bei angehobenen Lastaufnahmemitteln erzielt und ein Überfahren höherer Schwellen und Hindernisse mit dem Routenzuganhänger ermöglicht. Weiterhin kann durch das Rückneigung der Lastaufnahmemittel in der angehobene Stellung des Zinkenträgers das Gewicht der Lastaufnahmemittel reduziert werden, da die konstruktive Ausführung der Lastaufnahmemittel nicht auf eine geringe Durchbiegung ausgelegt werden muss. Dies führt zu einer Verringerung des Leergewichts des erfindungsgemäßen Routenzuganhängers und zu einer Erhöhung der zulässigen Zuladung.

Weitere Vorteile und Einzelheiten der Erfindung werden anhand des in den schematischen Figuren dargestellten Ausführungsbeispiels näher erläutert. Hierbei zeigt
- Figur 1: einen erfindungsgemäßen Routenzuganhänger in einer perspektivischen Darstellung,
- Figur 2: einen Schnitt entlang der Linie A-A der Figur 1 in der abgesenkten Stellung des Zinkenträgers und
- Figur 3: einen Schnitt entlang der Linie A-A der Figur 1 in der angehobenen Stellung des Zinkenträgers.

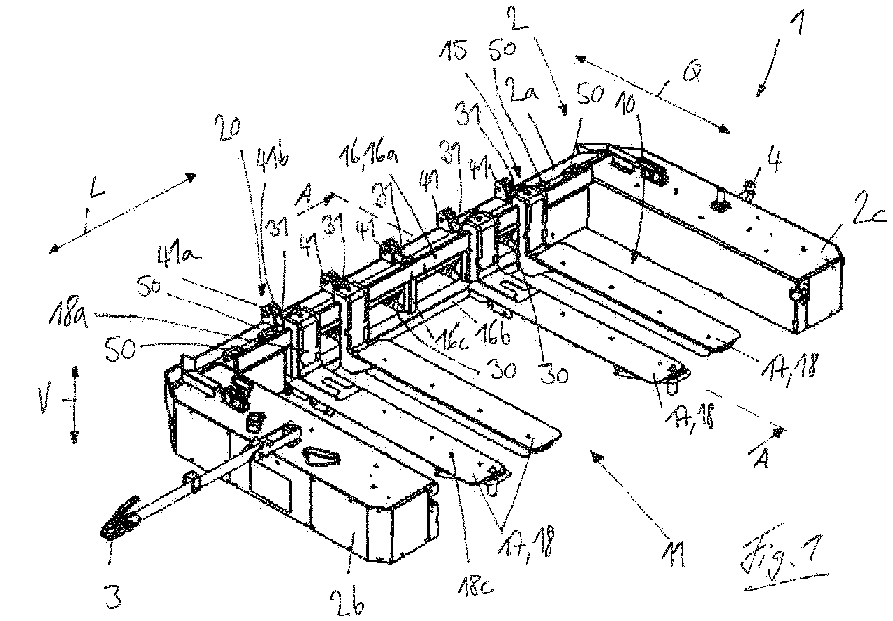

In der Figur 1 ist ein erfindungsgemäßer Routenzuganhänger 1 eines Routenzugs dargestellt.

Der Routenzuganhänger 1 weist einen Tragrahmen 2 auf, der im dargestellten Ausführungsbeispiel in der Draufsicht C-förmig ist. Der Tragrahmen 2 besteht aus einem seitlichen, in Fahrzeuglängsrichtung L verlaufenden Längsträger 2a und zwei rechtwinklig zum Längsträger 2a angeordnete und in Fahrzeugquerrichtung Q verlaufenden Querträgern 2b, 2c. Der Längsträger 2a und die Querträger 2b, 2c sind bevorzugt miteinander verschweißt. Der Querträger 2b ist als vorderer Querträger ausgebildet und an der Front des Routenzuganhängers 1 angeordnet und mit einer Deichsel 3 versehen, mit der der Routenzuganhänger 1 an einen vorausfahrenden Routenzuganhänger oder an einen Schlepper des Routenzugs angekuppelt werden kann. Der Querträger 2c ist als hinterer Querträger ausgebildet und am Heck des Routenzuganhängers 1 angeordnet und mit einer Anhängevorrichtung 4 versehen, an die ein hinterherfahrender Routenzuganhänger mit dessen Deichsel angekuppelt werden kann.

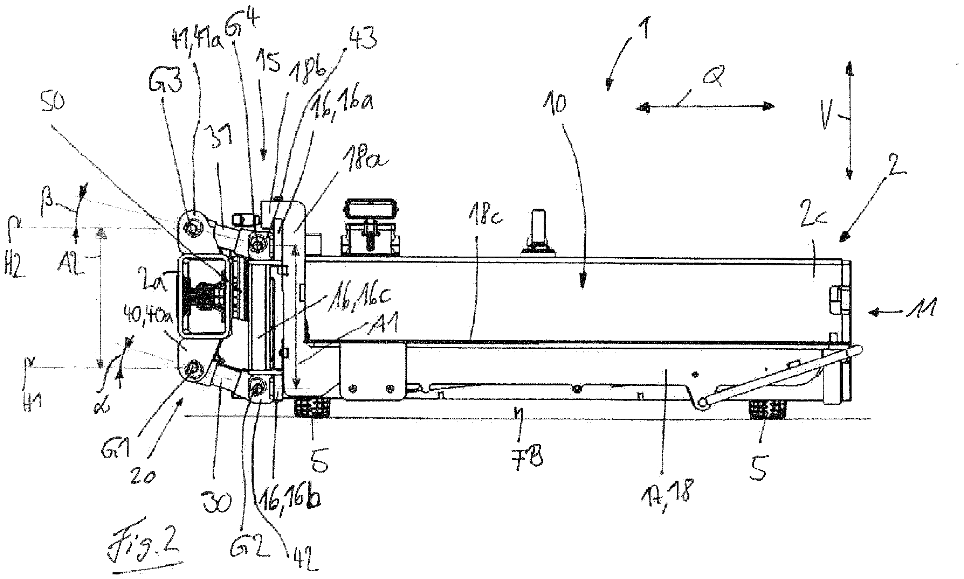

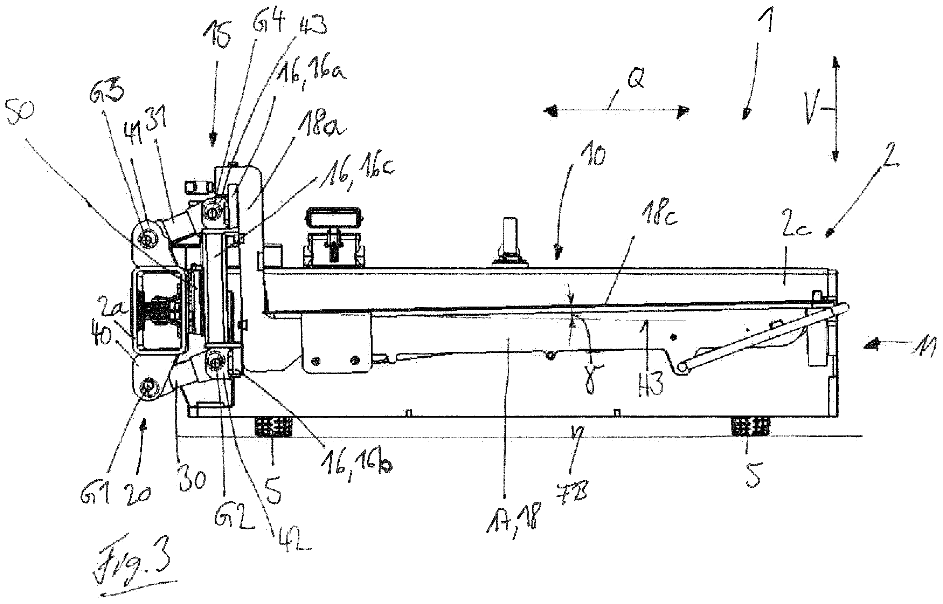

Der vordere Querträger 2b und der hintere Querträger 2c des Tragrahmens 2 sind - wie aus den Figuren 2 und 3 ersichtlich ist - jeweils mit Rädern 5 versehen, mit denen sich der Routenzuganhänger 1 auf einer Fahrbahn FB abstützt.

Der C-förmige Tragrahmen 2 begrenzt mit dem Längsträger 2a und den beiden Querträgern 2b, 2c einen Aufnahmeraum 10, in den ein oder mehrere Ladungsträger aufgenommen werden können, beispielsweise fahrbare Trolleys oder fahrbare Gitterboxen. Der C-förmige Tragrahmen 2 bildet auf der dem Längsträger 2a gegenüberliegenden Fahrzeugseite eine Ladeöffnung 11, über die die Ladungsträger auf ihren Rollen in den Aufnahmeraum 10 hineingeschoben bzw. aus dem Aufnahmeraum 10 herausgezogen werden können.

Zur Aufnahme des mindestens einen Ladungsträgers weist der Routenzuganhänger 1 einen Lastenträger 15 auf, der an dem Tragrahmen 2 mittels einer Hubvorrichtung 20 zwischen einer abgesenkten Stellung und einer angehobenen Stellung anhebbar und absenkbar angeordnet ist. Der Lastenträger 15 besteht aus einem mittels der Hubvorrichtung 20 relativ zum Tragrahmen 2 anhebbar und absenkbar angeordneten Zinkenträger 16, an dem mindestens ein Lastaufnahmemittel 17 zur Aufnahme des Ladungsträgers angeordnet ist. Der Zinkenträger 16 erstreckt sich in Fahrzeuglängsrichtung L und ist parallel zu dem Längsträger 2a angeordnet. Im dargestellten Ausführungsbeispiel sind die Lastaufnahmemittel 17 jeweils als Gabelzinken 18 ausgebildet. Die Gabelzinken 18 sind parallel zu den Querträgern 2b, 2c angeordnet und erstrecken sich in Fahrzeugquerrichtung Q.

Die Länge der Gabelzinken 18 entspricht im Wesentlichen derjenigen der beiden Querträger 2a, 2b. In dem dargestellten Ausführungsbeispiel sind insgesamt vier Gabelzinken 18 an dem Zinkenträger 16 angeordnet. Da diese jedoch unabhängig voneinander sind, können je nach Bedarf auch mehr oder weniger Gabelzinken 18 eingesetzt werden.

Der Zinkenträger 16 weist - wie in Zusammenschau mit den Figuren 2 und 3 ersichtlich ist - ein oberes Tragprofil 16a und ein unteres Tragprofil 16b auf, die mittels mehrerer in vertikaler Richtung V verlaufender Streben 16c miteinander verbunden sind. Die Gabelzinken 18 sind im oberen Bereich eines Gabelrückens 18a mit einer U- förmigen Abwincklung 18b ausgebildet, die das oberen Tragprofil 16a des Zinkenträgers 16 umgreift und mit der die Gabelzinken 18 an dem oberen Tragprofil 16a des Zinkenträgers 16 eingehängt werden können. Im unteren Bereich des Gabelrückens 18a stützen sich die Gabelzinken 18 an dem unteren Tragprofil 16b des Zinkenträgers 16 ab. Ein senkrecht zu dem Gabelrücken 18a angeordneter Tragabschnitt 18c der Gabelzinken 18 erstreckt sich in Fahrzeugquerrichtung Q zu der Ladeöffnung 11, in deren Bereich die Gabelzinkenspitzen der Gabelzinken 18 angeordnet sind.

Die Gabelzinken 18 sind bevorzugt entlang des Zinkenträgers 16 manuell verstellbar angeordnet. Alternativ können die Gabelzinken 18 an vorgegebenen Positionen an dem Zinkenträger 16 fest angebracht sein.

Die Hubvorrichtung 20 des Zinkenträgers 16 weist erfindungsgemäß mindestens einen unteren Lenkerarm 30 und mindestens einen oberen Lenkerarm 31 auf, mit denen der Zinkenträger 16 an dem Tragrahmen 2 angebunden und somit angekoppelt ist. Der obere Lenkerarm 31 ist hierbei von dem unteren Lenkerarm 31 in vertikaler Richtung V beabstandet angeordnet. Die Kinematik der Lenkerarme 30, 31 ist derart ausgeführt, dass beim Anheben des Zinkenträgers 16 von der abgesenkten Stellung der Figur 2 in die angehobene Stellung der Figur 3 ein Rückneigen der Gabelzinken 18 erzielt wird.

Der untere Lenkerarm 30 ist mittels einer ersten Gelenkachse G1 mit dem Tragrahmen 2 und mittels einer zweiten Gelenkachse G2 mit dem Zinkenträger 16 gelenkig verbunden. Entsprechend ist der obere Lenkerarm 31 mittels einer dritten Gelenkachse G3 mit dem Tragrahmen 2 und mittels einer vierten Gelenkachse G4 mit dem Zinkenträger 16 gelenkig verbunden. Die Gelenkachsen G1-G4 verlaufen jeweils in Fahrzeuglängsrichtung L.

Die Gelenkachsen G1-G4 sind hierbei derart angeordnet, dass der untere Lenkerarm 30 und der obere Lenkerarm 31 zumindest in der abgesenkten Stellung des Zinkenträgers 16 nicht parallel zueinander angeordnet sind. Die Gelenkachsen G1 und G3 bilden hierbei tragrahmenseitige Gelenkachsen und die Gelenkachsen G2 und G4 zinkenträgerseitige Gelenkachsen.

Wie aus der Figur 2 ersichtlich ist, ist in der abgesenkten Stellung des Zinkenträgers 16 der vertikale Abstand A1 zwischen der zweiten Gelenkachse G2 und der vierten Gelenkachse G4 und somit der vertikale Abstand A1 der zinkenträgerseitigen Gelenkachsen G2, G4 größer als der vertikale Abstand A2 zwischen der ersten Gelenkachse G1 und der dritten Gelenkachse G3 und somit größer als der vertikale Abstand A1 der tragrahmenseitigen Gelenkachsen G1, G3.

Dadurch wird erzielt, dass in der in der Figur 2 dargestellten abgesenkten Stellung des Zinkenträgers 16 der untere Lenkerarm 30 gegenüber einer parallel zur Fahrbahn FB angeordneten Horizontalebene H1 um den Winkel α nach unten geneigt angeordnet ist und der obere Lenkerarm 30 gegenüber einer parallel zur Fahrbahn FB angeordneten Horizontalebene H2 um den Winkel β nach unten geneigt angeordnet, wobei der Winkel α größer als der Winkel β ausgeführt ist. Der obere Lenkerarm 31 ist somit in der abgesenkten Stellung des Zinkenträgers 16 flacher angeordnet als der untere Lenkerarm 30.

Dadurch wird weiter erzielt, dass der untere Lenkerarm 30 und der obere Lenkerarm 31 als Gleichteile mit identischen Längen zwischen den Gelenkachsen G1, G2 bzw. G3, G4 ausgeführt sein können.

Im dargestellten Ausführungsbeispiel sind die erste Gelenkachse G1 und die dritte Gelenkachse G3 an dem Längsträger 2a des Tragrahmens 2 angeordnet. An dem Längsträger 2a ist hierzu jeweils eine Befestigungskonsole 40, 41 angeordnet, die jeweils aus zwei in Fahrzeuglängsrichtung L voneinander beabstandet angeordneten Lagerplatten 40a, 40b bzw. 41a, 41b gebildet ist, die mit Aufnahmebohrungen für einen Lagerbolzen versehen sind. An den tragrahmenseitigen Ende der Lenkerarme 30, 31 sind hierzu bevorzugt Gelenkköpfe als Radiallager angeordnet, die zwischen den entsprechenden Lagerplatten 40a, 40b bzw. 41a, 41b angeordnet sind und die den entsprechenden Lagerbolzen aufnehmen.

Die erste Gelenkachse G1 ist bevorzugt an der Unterseite des Längsträges 2a angeordnet und die dritte Gelenkachse G3 an der Oberseite des Längsträgers 2a angeordnet.

Im dargestellten Ausführungsbeispiel ist die zweite Gelenkachse G2 an der dem Gabelrücken 18a gegenüberliegenden Seite des unteren Tragprofils 16b des Zinkenträgers 16 angeordnet. Entsprechend ist die vierte Gelenkachse G4 an der dem Gabelrücken 18a gegenüberliegenden Seite des oberen Tragprofils 16a des Zinkenträgers 16 angeordnet. An dem Zinkenträger 16 ist hierzu jeweils eine Befestigungskonsole 42, 43 angeordnet, die jeweils aus zwei in Fahrzeuglängsrichtung L voneinander beabstandet angeordneten Lagerplatten gebildet ist, die mit Aufnahmebohrungen für einen Lagerbolzen versehen sind. An den zinkenträgerseitigen Ende der Lenkerarme 30, 31 sind hierzu bevorzugt Gelenkköpfe als Radiallager angeordnet, die zwischen den entsprechenden Lagerplatten angeordnet sind und die den entsprechenden Lagerbolzen aufnehmen.

Die Hubvorrichtung 20 umfasst weiterhin mindestens einen Hubantrieb 50. Der Hubantrieb 50 ist bevorzugt als Linearantrieb ausgebildet, der zwischen dem Tragrahmen 2 und dem Zinkenträger 16 angeordnet ist. Im dargestellten Ausführungsbeispiel ist der Linearantrieb in vertikaler Richtung V angeordnet und stützt sich einerseits an dem Längsträger 2a und andererseits an dem Zinkenträger 16 in dessen oberen Bereich ab. Der Linearantrieb ist bevorzugt als elektrischer Linearantrieb ausgebildet.

Wie aus der Figur 1 ersichtlich ist, sind im dargestellten Ausführungsbeispiel fünf obere Lenkerarme 31 und entsprechend fünf untere Lenkerarme 30 vorgesehen, die in Längsrichtung L am Längsträger 2a und am Zinkenträger 16 verteilt angeordnet sind. Weiterhin können mehrere Hubantriebe 50 vorgesehen sein.

In der in der Figur 2 dargestellten abgesenkten Stellung des Zinkenträgers 16 sind die Gabelzinken 18 mit den Tragabschnitten 18c waagerecht und bevorzugt parallel zur Fahrbahn FB angeordnet. In den Aufnahmeraum 10 können dann auf der Fahrbahn FB mit Rollen fahrbare Ladungsträger eingeschoben werden. Anschließend kann durch Betätigen des Hubantriebs 50 der Zinkenträger 16 mit den daran befestigten Gabelzinken 18 angehoben werden, so dass die Ladungsträger mit den Gabelzinken 18 aufgenommen und angehoben werden, so dass die Rollen der Ladungsträger von der Fahrbahn FB abheben.

Beim Anheben des Zinkenträgers 16 bewegt sich hierbei die zweite Gelenkachse G2 des unteren Lenkerarms 30 auf einer Kreisbahn um die erste Gelenkachse G1 und entsprechend die vierte Gelenkachse G4 des oberen Lenkerarms 31 auf einer Kreisbahn um die dritte Gelenkachse G3. Durch die nicht parallele Anordnung der beiden Lenkerarme 30, 31 und die Wahl der Winkel α, β bewegt sich beim Anheben die vierte Gelenkachse G4 relativ zur zweiten Gelenkachse G2 in Fahrzeugquerrichtung Q in Richtung auf den Längsträger 2a zu, so dass der Zinkenträger 16 beim Anheben im Gegenuhrzeigersinn verkippt wird, wodurch die Gabelzinken 18 vorne im Bereich der Gabelzinkenspitzen weiter angehoben werden als hinten im Bereich des Gabelrückens 18a und somit eine Schrägstellung und ein Rückneigen der Gabelzinken 18 in der angehobenen Stellung des Zinkenträgers 16 erzielt wird. In der in der Figur 3 dargestellten angehobene Stellung des Zinkenträgers 16 befinden sich die Gabelzinken 18 in der maximal rückgeneigten Stellung, in der die Tragabschnitte 18c des unbelasteten Gabelzinkens 18 um den Neigewinkel γ geneigt zu einer parallel zur Fahrbahn FB verlaufenden Horizontalebene H3 angeordnet sind. Dadurch kann die aus dem aufgenommenen Ladungsträger herrührende Durchbiegung des belasteten Gabelzinkens 18 kompensiert werden und erzielt werden, dass der Tragabschnitt 18c eines belasteten Gabelzinkens 18 in der angehobenen Stellung des Zinkenträgers 16 waagerecht und somit parallel zur Fahrbahn FB oder leicht nach hinten in Richtung zum Zinkenträger 16 zurückgeneigt ist.

Die Erfindung ist nicht auf die dargestellte Ausführungsform des Routenzuganhängers 1 beschränkt. Es versteht sich, dass der Längsträger 2a auch in Fahrzeugquerrichtung Q mittig angeordnet sein kann, wobei an einer oder beiden Seiten des Längsträgers 2a ein mittels einer erfindungsgemäßen Hubvorrichtung 20 anhebbarer Zinkenträger 16 angeordnet sein kann. Weiterhin ist die Erfindung nicht auf einen C-förmigen Tragrahmen 2 beschränkt. Alternativ kann der Tragrahen als E-förmiger Tragrahmen ausgebildet sein, wobei an einem mittleren Querträger die Räder angeordnet sind.

## Patentansprüche

1. Routenzuganhänger (1) für einen Routenzug, wobei der Routenzuganhänger (1) einen Tragrahmen (2) mit mindestens einem Rad (5) und einen an dem Tragrahmen (2) mittels einer Hubvorrichtung (20) zwischen einer abgesenkten Stellung und einer angehobenen Stellung anhebbar und absenkbar angeordneten Lastenträger (15) aufweist, wobei der Lastenträger (15) einen Zinkenträger (16) aufweist, an dem mindestens ein Lastaufnahmemittel (17), insbesondere eine Gabelzinke (18), zur Aufnahme eines Ladungsträgers angeordnet ist, **dadurch gekennzeichnet, dass** die Hubvorrichtung (20) mindestens einen unteren Lenkerarm (30) und mindestens einen oberen Lenkerarm (31) aufweist, wobei der Zinkenträger (16) mittels den Lenkerarmen (30, 31) mit dem Tragrahmen (2) verbunden ist und wobei der obere Lenkerarm (31) von dem unteren Lenkerarm (30) in vertikaler Richtung (V) beabstandet angeordnet ist, wobei die Kinematik der Lenkerarme (30, 31) derart ausgeführt ist, dass beim Anheben des Zinkenträgers (16) von der abgesenkten Stellung in die angehobene Stellung ein Rückneigen des Lastaufnahmemittels (17) erzielt wird.

2. Routenzuganhänger nach Anspruch 1, **dadurch gekennzeichnet, dass** der untere Lenkerarm (30) mittels einer ersten Gelenkachse (G1) mit dem Tragrahmen (2) und mittels einer zweiten Gelenkachse (G2) mit dem Zinkenträger (16) verbunden ist und der obere Lenkerarm (31) mittels einer dritten Gelenkachse (G3) mit dem Tragrahmen (2) und mittels einer vierten Gelenkachse (G4) mit dem Zinkenträger (16) verbunden ist, wobei die Gelenkachsen (G1, G2, G3, G4) derart angeordnet sind, dass der untere Lenkerarm (30) und der obere Lenkerarm (31) zumindest in der abgesenkten Stellung nicht parallel zueinander angeordnet sind.

3. Routenzuganhänger nach Anspruch 1 oder 2, **dadurch gekennzeichnet, dass** in der abgesenkten Stellung der vertikale Abstand (A1) zwischen der zweiten Gelenkachse (G2) und der vierten Gelenkachse (G4) größer als der vertikale Abstand (A2) zwischen der ersten Gelenkachse (G1) und der dritten Gelenkachse (G3) ist.

4. Routenzuganhänger nach einem der Ansprüche 1 bis 3, **dadurch gekennzeichnet, dass** in der abgesenkten Stellung der untere Lenkerarm (30) gegenüber einer Horizontalebene (H1) um den Winkel α geneigt angeordnet ist und der obere Lenkerarm (31) gegenüber einer Horizontalebene (H2) um den Winkel β geneigt angeordnet, wobei der Winkel α größer als der Winkel β ausgeführt ist.

5. Routenzuganhänger nach einem der Ansprüche 1 bis 4, **dadurch gekennzeichnet, dass** der untere Lenkerarm (30) und der obere Lenkerarm (31) mit identischen Längen zwischen den Gelenkachsen (G1, G2; G3, G4) ausgeführt sind.

6. Routenzuganhänger nach einem der Ansprüche 1 bis 5, **dadurch gekennzeichnet, dass** der Tragrahmen (2) einen Längsträger (2a) und zumindest einen Querträger (2b; 2c) aufweist, wobei die erste Gelenkachse (G1) und die dritte Gelenkachse (G3) an dem Längsträger (2) angeordnet ist.

7. Routenzuganhänger nach Anspruch 6, **dadurch gekennzeichnet, dass** die die erste Gelenkachse (G1) an der Unterseite des Längsträges (2a) angeordnet ist und die dritte Gelenkachse (G3) an der Oberseite des Längsträgers (2a) angeordnet ist.

8. Routenzuganhänger nach einem der Ansprüche 1 bis 7, **dadurch gekennzeichnet, dass** die Hubvorrichtung (20) mindestens einen Hubantrieb (50) aufweist.

9. Routenzuganhänger nach Anspruch 8, **dadurch gekennzeichnet, dass** der Hubantrieb (50) als Linearantrieb ausgebildet ist, der zwischen dem Tragrahmen (2) und dem Zinkenträger (16) angeordnet ist.

10. Routenzuganhänger nach Anspruch 9, **dadurch gekennzeichnet, dass** der Linearantrieb als elektrischer Linearantrieb ausgebildet ist.

## Claims

1. Tugger train trailer (1) for a tugger train, wherein the tugger train trailer (1) has a support frame (2) with at least one wheel (5) and a load carrier (15) arranged on the support frame (2) so as to be able to be raised and lowered between a lowered position and a raised position by means of a lifting device (20), wherein the load carrier (15) has a tine carrier (16), on which at least one load pickup means (17), in particular a fork tine (18), for picking up an item of loading equipment is arranged, **characterized in that** the lifting device (20) has at least one lower link arm (30) and at least one upper link arm (31), wherein the tine carrier (16) is connected to the support frame (2) by means of the link arms (30, 31) and wherein the upper link arm (31) is spaced apart from the lower link arm (30) in the vertical direction (V), wherein the kinematics of the link arms (30, 31) are designed such that, when the tine carrier (16) is being raised from the lowered position into the raised position, a backwards tilting of the load pickup means (17) is achieved.

2. Tugger train trailer according to Claim 1, **characterized in that** the lower link arm (30) is connected to the support frame (2) by means of a first joint axis (G1) and to the tine carrier (16) by means of a second joint axis (G2), and the upper link arm (31) is connected to the support frame (2) by means of a third joint axis (G3) and to the tine carrier (16) by means of a fourth joint axis (G4), wherein the joint axes (G1, G2, G3, G4) are arranged in such a way that the lower link arm (30) and the upper link arm (31) are not arranged parallel to one another at least in the lowered position.

3. Tugger train trailer according to Claim 1 or 2, **characterized in that**, in the lowered position, the vertical distance (A1) between the second joint axis (G2) and the fourth joint axis (G4) is larger than the vertical distance (A2) between the first joint axis (G1) and the third joint axis (G3).

4. Tugger train trailer according to one of Claims 1 to 3, **characterized in that**, in the lowered position, the lower link arm (30) is inclined at the angle α in relation to a horizontal plane (H1) and the upper link arm (31) is inclined at the angle β in relation to a horizontal plane (H2), wherein the angle α is greater than the angle β.

5. Tugger train trailer according to one of Claims 1 to 4, **characterized in that** the lower link arm (30) and the upper link arm (31) are designed with identical lengths between the joint axes (G1, G2; G3, G4).

6. Tugger train trailer according to one of Claims 1 to 5, **characterized in that** the support frame (2) has a longitudinal member (2a) and at least one crossmember (2b; 2c), wherein the first joint axis (G1) and the third joint axis (G3) are arranged on the longitudinal member (2) .

7. Tugger train trailer according to Claim 6, **characterized in that** the first joint axis (G1) is arranged on the bottom side of the longitudinal member (2a) and the third joint axis (G3) is arranged on the top side of the longitudinal member (2a).

8. Tugger train trailer according to one of Claims 1 to 7, **characterized in that** the lifting device (20) has at least one lifting drive (50).

9. Tugger train trailer according to Claim 8, **characterized in that** the lifting drive (50) is configured as a linear drive arranged between the support frame (2) and the tine carrier (16).

10. Tugger train trailer according to Claim 9, **characterized in that** the linear drive is configured as an electric linear drive.

## Revendications

1. Remorque de chariot tracteur (1) pour un chariot tracteur, la remorque de chariot tracteur (1) présentant un cadre porteur (2) avec au moins une roue (5) et un support de charge (15) agencé sur le cadre porteur (2) de manière à pouvoir être soulevé et abaissé au moyen d'un dispositif de levage (20) entre une position abaissée et une position soulevée, le support de charge (15) présentant un support de dents (16) sur lequel est agencé au moins un moyen de réception de charge (17), notamment une dent de fourche (18), pour la réception d'un support de charge, **caractérisée en ce que** le dispositif de levage (20) présente au moins un bras articulé inférieur (30) et au moins un bras articulé supérieur (31), le support de dents (16) étant relié au cadre porteur (2) au moyen des bras articulés (30, 31) et le bras articulé supérieur (31) étant agencé à distance du bras articulé inférieur (30) dans la direction verticale (V), la cinématique des bras articulés (30, 31) étant réalisée de telle sorte que lors du soulèvement du support de dents (16) de la position abaissée à la position soulevée, une inclinaison vers l'arrière du moyen de réception de charge (17) est obtenue.

2. Remorque de chariot tracteur selon la revendication 1, **caractérisée en ce que** le bras articulé inférieur (30) est relié au cadre porteur (2) au moyen d'un premier axe d'articulation (G1) et au support de dents (16) au moyen d'un deuxième axe d'articulation (G2) et le bras articulé supérieur (31) est relié au cadre porteur (2) au moyen d'un troisième axe d'articulation (G3) et au support de dents (16) au moyen d'un quatrième axe d'articulation (G4), les axes d'articulation (G1, G2, G3, G4) étant agencés de telle sorte que le bras articulé inférieur (30) et le bras articulé supérieur (31) ne sont pas agencés parallèlement l'un à l'autre, au moins dans la position abaissée.

3. Remorque de chariot tracteur selon la revendication 1 ou 2, **caractérisée en ce que**, dans la position abaissée, la distance verticale (A1) entre le deuxième axe d'articulation (G2) et le quatrième axe d'articulation (G4) est supérieure à la distance verticale (A2) entre le premier axe d'articulation (G1) et le troisième axe d'articulation (G3).

4. Remorque de chariot tracteur selon l'une quelconque des revendications 1 à 3, **caractérisée en ce que**, dans la position abaissée, le bras articulé inférieur (30) est agencé incliné de l'angle α par rapport à un plan horizontal (H1) et le bras articulé supérieur (31) est agencé incliné de l'angle β par rapport à un plan horizontal (H2), l'angle α étant supérieur à l'angle β.

5. Remorque de chariot tracteur selon l'une quelconque des revendications 1 à 4, **caractérisée en ce que** le bras articulé inférieur (30) et le bras articulé supérieur (31) sont réalisés avec des longueurs identiques entre les axes d'articulation (G1, G2 ; G3, G4).

6. Remorque de chariot tracteur selon l'une quelconque des revendications 1 à 5, **caractérisée en ce que** le cadre porteur (2) présente un longeron (2a) et au moins une traverse (2b ; 2c), le premier axe d'articulation (G1) et le troisième axe d'articulation (G3) étant agencés sur le longeron (2).

7. Remorque de chariot tracteur selon la revendication 6, **caractérisée en ce que** le premier axe d'articulation (G1) est agencé sur le côté inférieur du longeron (2a) et le troisième axe d'articulation (G3) est agencé sur le côté supérieur du longeron (2a).

8. Remorque de chariot tracteur selon l'une quelconque des revendications 1 à 7, **caractérisée en ce que** le dispositif de levage (20) présente au moins un entraînement de levage (50).

9. Remorque de chariot tracteur selon la revendication 8, **caractérisée en ce que** l'entraînement de levage (50) est configuré sous forme d'entraînement linéaire qui est agencé entre le cadre porteur (2) et le support de dents (16) .

10. Remorque de chariot tracteur selon la revendication 9, **caractérisée en ce que** l'entraînement linéaire est configuré sous forme d'entraînement linéaire électrique.
